# FASCICULE DE BREVET EUROPEEN

(11) **EP 1 249 653 B1**
(45) Date de publication et mention de la délivrance du brevet: **28.01.2004**
(21) Numéro de dépôt: 01400908.8
(22) Date de dépôt: 09.04.2001
(51) Int. Cl.: F16L 3/26, H02G 3/04, F16B 5/00

(54) **Elément de chemin de cables**
Kabelrinnenelement
Cable tray element

(43) Date de publication de la demande: 16.10.2002
(73) Titulaire: Société de Constructions Electriques de la Seine ( CES), 92130 Issy-les-Moulineaux (FR)
(72) Inventeur: Dufourg, Pierre Stéphane, 75014 Paris (FR)
(74) Mandataire: Burbaud, Eric

(56) Documents cités:
- EP-A- 0 930 685
- WO-A-99/53584
- DE-A- 3 737 187
- FR-A- 1 262 928
- GB-A- 682 776
- US-A- 3 680 817

## Description

La présente invention est relative aux éléments de chemins de câbles.

Plus particulièrement, l'invention concerne un élément de chemin de câble comportant :
- une plaque de fond qui présente au moins deux bords latéraux opposés,
- et au moins deux profilés en L comprenant chacune d'une part, une aile de soutien disposée sous la plaque de fond parallèlement à ladite plaque de fond et d'autre part, une aile latérale s'étendant perpendiculairement à la plaque de fond, au-dessus de ladite plaque de fond, les bords latéraux de la plaque de fond étant fixés aux ailes de soutien des profilés en L, lesdits bords latéraux étant parallèles aux ailes de soutien et reposant sur lesdits ailes de soutien.

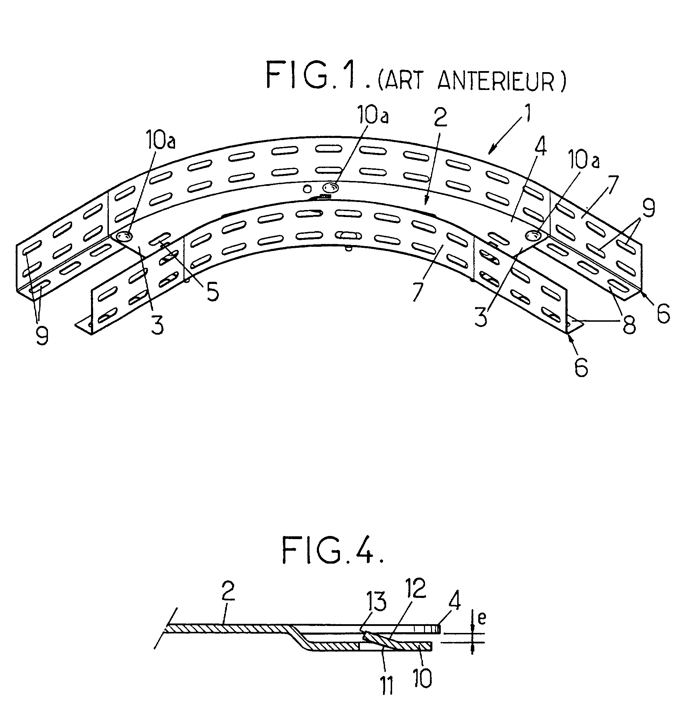

Dans les éléments de chemin de câbles connus de ce type, dont un exemple est représenté sur la figure 1 jointe, la plaque de fond est généralement fixée aux ailes de soutien des profilés en L au moyen de boulons, ce qui nécessite un assemblage fastidieux, long et coûteux en main d'oeuvre.

De plus, les boulons en question augmentent l'encombrement du chemin de câbles, ce qui n'est pas souhaitable. Un autre systeme de montage est décrit dans le US-A-3 680 817.

La présente invention a notamment pour but de pallier ces inconvénients.

A cet effet, selon l'invention un élément de chemin de câbles du genre en question est caractérisé en ce que les bords latéraux de la plaque de fond coopèrent par clipsage directement avec les ailes de soutien des profilés en L.

Dans des modes de réalisation préférés de l'invention, on peut éventuellement avoir recours en outre
à l'une à l'autre des dispositions suivantes :
- la plaque de fond est réalisée en tôle et les bords latéraux de la plaque comportent chacun plusieurs languettes découpées et pliées dans ladite plaque de fond, chacune de ces languettes étant engagée sans jeu sous l'aile de soutien d'un des profilés en L, parallèlement à ladite aile de soutien, tandis que ladite plaque de fond repose sur ladite aile de soutien ;
- les ailes de soutien des profilés en L comprennent chacune des perforations, les languettes de la plaque de fond comprenant chacune au moins un relief qui fait saillie sur ladite languette et qui est engagé dans l'une des perforations de l'aile de soutien du profilé en L correspondant, en empêchant ledit profilé en L de se séparer de la plaque de fond ;
- chaque relief d'une des languettes comporte d'une part, une surface biaise qui fait saillie sur une hauteur progressivement croissante en s'éloignant de l'aile latérale du profilé en L correspondant, et d'autre part, une face d'extrémité adaptée pour coopérer par butée avec un bord de la perforation qui reçoit ledit relief, en empêchant ainsi ledit profilé en L de se séparer de la plaque de fond ;
- chaque relief est un crevé réalisé dans la languette correspondante ;
- les bords latéraux de la plaque de fond et les profilés en L sont courbes.

D'autres caractéristiques et avantages de l'invention apparaîtront au cours de la description détaillée suivante d'une de ses formes de réalisation, donnée à titre d'exemple non limitatif.

Sur les dessins :
- la figure 1 est une vue en perspective d'un élément de chemin de câbles de l'art antérieur,
- la figure 2 est une vue éclatée en perspective d'un élément de chemin de câbles selon une forme de réalisation de l'invention,
- la figure 3 est une vue en perspective de la plaque de fond de l'élément de chemin de câbles de la figure 2,
- la figure 4 est une vue en coupe selon la ligne IV-IV de la figure 3,
- et la figure 5 est une vue du détail V de la figure 2.

Comme représenté sur la figure 1, l'invention vise à perfectionner les éléments de chemin de câbles de l'art antérieur comprenant une plaque de fond 2 en tôle qui s'étend longitudinalement entre deux extrémités 3 et présente au moins deux bords latéraux opposés 4 longés chacun par un profilé en L 6. Dans l'exemple considéré, la plaque de fond 2 comporte en outre des perforations 5 en forme de trous oblongs, qui servent à attacher les câbles ou autres conduites (non représentés) portés par le chemin de câbles.

Dans l'exemple considéré, l'élément de chemin de câbles 1 est un élément de jonction courbe permettant de réaliser un virage du chemin de câbles, de sorte que les deux bords latéraux 4 opposés sont en forme d'arcs de cercles, et les profilés en L 6 ont eux-mêmes des formes d'arcs de cercles correspondant respectivement aux formes des bords latéraux 4.

Bien entendu, l'invention s'appliquerait également à d'autres types d'éléments de jonction de chemins de câbles, telles que des jonctions en T, des jonctions en croix, ou le cas échéant des tronçons droits de chemins de câbles, bien que l'invention soit plus particulièrement intéressante pour réaliser des éléments de jonctions de formes complexes présentant des bords courbes.

Les profilés en L 6 sont deux cornières de tôle dotées de perforations 9 en forme de trous oblongs qui s'étendent longitudinalement parallèlement à la direction longitudinale du chemin de câbles, et chaque profilé en L comporte d'une part, une aile de soutien 8 disposée sous la plaque de fond 2 et parallèlement à ladite plaque de fond, et d'autre part, une aile latérale 7 disposée perpendiculairement à la plaque de fond 2 au-dessus de ladite plaque de fond.

Les ailes de soutien 8 des profilés en L 6 supportent la plaque de fond 2, qui est fixée sur ces ailes de soutien par des boulons 10a traversant des perforations 9 desdites ailes de soutien.

Comme représenté sur les figures 2 à 5, pour éviter l'utilisation de ces boulons 10a, selon l'invention, on réalise, le long de chaque bord latéral 4 de la plaque de fond 2, des languettes 10 découpées et pliées à partir de ladite plaque de fond et s'étendant parallèlement au plan général de la plaque de fond.

Comme représenté plus en détail sur la figure 4, chacune de ces languettes 10 est décalée vers le bas par rapport au reste de la plaque de fond. Plus précisément, la face supérieure de chaque languette 10 est décalée d'une hauteur e par rapport à la face inférieure du reste de la plaque de fond 2, laquelle épaisseur e est de préférence légèrement inférieure à l'épaisseur de la tôle formant les profilés en L 6.

De plus, chaque languette 10 comporte un ou deux reliefs 11, formé(s) en l'occurrence chacun par un crevé ménagé dans ladite languette 10, et présentant d'une part, une surface supérieure biaise 12 qui fait saillie d'une hauteur progressivement croissante en s'éloignant du bord latéral 4 correspondant, et d'autre part, un bord d'extrémité 13 disposé à l'opposé du bord latéral 4 correspondant.

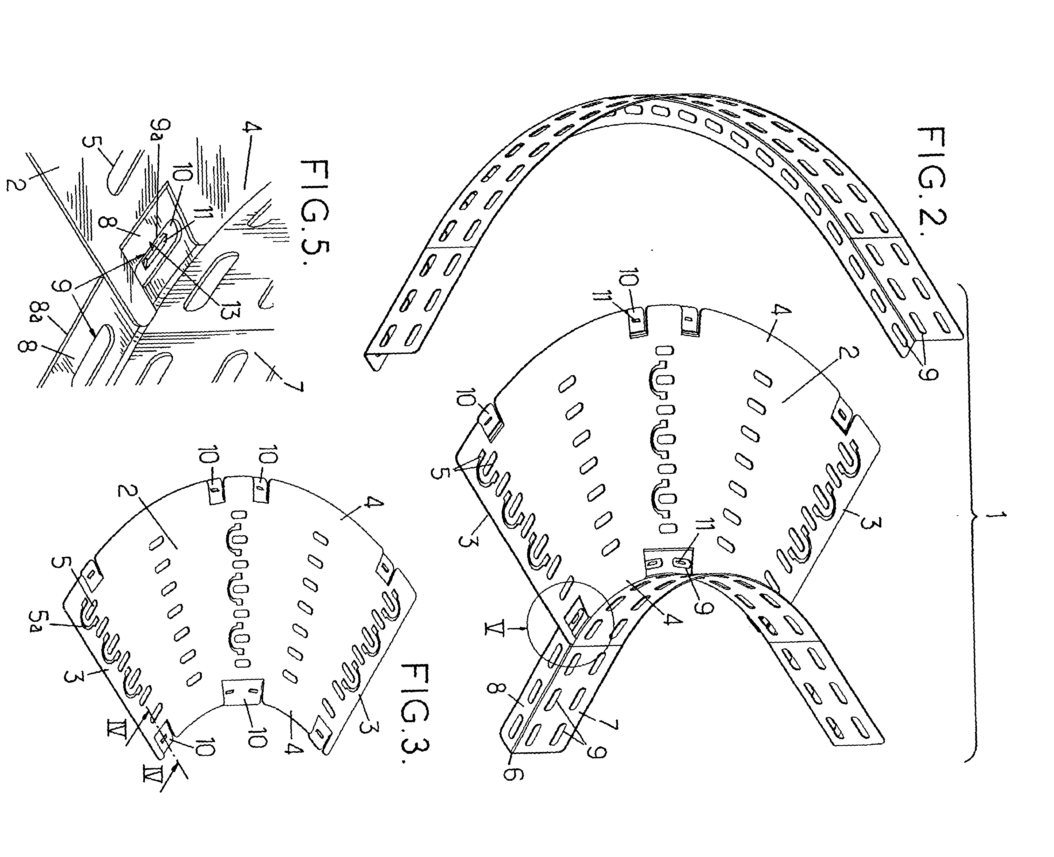

Ainsi, comme représenté sur la figure 5, pour solidariser les profilés en L 6 avec la plaque de fond 2, on emboîte à force les ailes de soutien 8 des profilés en L au-dessus des languettes 10 et au-dessous des bords latéraux 4 de la plaque de fond. Lors de cet emboîtement, les crevés 11 et les languettes 10 se déforment élastiquement lorsque le bord intérieur 8a de chaque aile de soutien 8 appuie sur la surface biaise 12 desdits crevés, puis les crevés 11 et les languettes 10 reviennent élastiquement sensiblement à leur position de repos lorsque lesdits crevés 11 s'engagent dans les perforations 9 des ailes de soutien 8.

Les bords d'extrémités 13 des crevés 11 coopèrent alors par butée avec les bords 9a des perforations 9 correspondantes, pour empêcher les profilés en L 6 de se dégager de la plaque de fond 2.

## Revendications

1. Elément de chemin de câbles comportant :
- une plaque de fond (2) qui présente au moins deux bords latéraux (4) opposés,
- et au moins deux profilés en L (6) comprenant chacun d'une part, une aile de soutien (8) disposée sous la plaque de fond (2) parallèlement à ladite plaque et d'autre part, une aile latérale (7) s'étendant perpendiculairement à la plaque de fond (2), au-dessus de ladite plaque de fond, les bords latéraux (4) de la plaque de fond étant fixés aux ailes de soutien (8) des profilés en L (6), lesdits bords latéraux (4) étant parallèles aux ailes de soutien (8) et reposant sur lesdites ailes de soutien,
**caractérisé en ce que** les bords latéraux (4) de la plaque de fond coopèrent par clipsage directement avec les ailes de soutien (8) des profilés en L.

2. Elément de chemin de câbles selon la revendication 1, dans lequel la plaque de fond (2) est réalisée en tôle et les bords latéraux (4) de la plaque comportent chacun plusieurs languettes (10) découpées et pliées dans ladite plaque de fond, chacune de ces languettes (10) étant engagée sans jeu sous l'aile de soutien (8) d'un des profilés en L (6) parallèlement à ladite aile de soutien (8), tandis que ladite plaque de fond (2) repose sur ladite aile de soutien (8).

3. Elément de chemin de câbles selon la revendication 2, dans lequel les ailes de soutien (8) des profilés en L (6) comprennent chacune des perforations (9), les languettes (10) de la plaque de fond comprenant chacune au moins un relief (11) qui fait saillie sur ladite languette et qui est engagé dans l'une des perforations (9) de l'aile de soutien (8) du profilé en L correspondant, en empêchant ledit profilé en L de se séparer de la plaque de fond (2).

4. Elément de chemin de câbles selon la revendication 3, dans lequel chaque relief (11) d'une des languettes (10) comporte d'une part, une surface biaise (12) qui fait saillie sur une hauteur progressivement croissante en s'éloignant de l'aile latérale (7) du profilé en L (6) correspondant, et d'autre part, une face d'extrémité (13) adaptée pour coopérer par butée avec un bord (9a) de la perforation (9) qui reçoit ledit relief, en empêchant ainsi ledit profilé en L (6) de se séparer de la plaque de fond (2).

5. Elément de chemin de câbles selon la revendication 3 ou la revendication 4, dans lequel chaque relief (11) est un crevé réalisé dans la languette (10) correspondante.

6. Elément de chemin de câbles selon l'une quelconque des revendications précédentes, dans lequel les bords latéraux (4) de la plaque de fond et les profilés en L (6) sont courbes.

## Patentansprüche

1. Kabelrinnenelement mit einer Bodenplatte (2) mit zumindest zwei einander gegenüberliegenden Seitenkanten (4), sowie zumindest zwei L-Profilen (6), die jeweils einerseits einen unter der Bodenplatte (2) parallel zu dieser Platte angeordneten Stützflügel (8) aufweisen und andererseits einen seitlichen Flügel (7), der sich rechtwinklig zu der Bodenplatte (2) nach oberhalb dieser Bodenplatte erstreckt, wobei die seitlichen Kanten (4) der Bodenplatte mit den Stützflügeln (8) der L-Profile (6) verbunden sind, parallel zu den Stützflügeln (8) sind und auf diesen Stützflügeln ruhen, **dadurch gekennzeichnet, dass** die Seitenkanten (4) der Bodenplatte über eine Clipverbindung direkt mit den Stützflügeln (8) der L-Profile zusammenwirken.

2. Kabelrinnenelement nach Anspruch 1, wobei die Bodenplatte (2) aus Blech besteht und die Seitenkanten (4) der Platte jeweils mehrere Zungen (10) aufweisen, die in dieser Bodenplatte ausgeschnitten und geknickt sind, wobei jede dieser Zungen (10) ohne Spiel unter dem Stützflügel (8) eines der L-Profile (6) parallel zu diesem Stützflügel (8) im Eingriff ist, während die Bodenplatte (2) auf diesem Stützflügel (8) ruht.

3. Kabelrinnenelement nach Anspruch 2, wobei die Stützflügel (8) der L-Profile (6) jeweils Perforationen (9) aufweisen, wobei die Zungen (10) der Bodenplatte jeweils zumindest eine Erhebung (11) aufweisen, die auf dieser Zunge hervorsteht und die mit jeweils einer der Perforationen (9) des Stützflügels (8) des zugehörigen L-Profils im Eingriff ist, wobei sie das L-Profil daran hindert, sich von der Bodenplatte (2) zu trennen.

4. Kabelrinnenelement nach Anspruch 3, wobei jede Erhebung (11) einer der Zungen (10) einerseits eine schräge Oberfläche (12) aufweist, die sich mit einer nach und nach ansteigenden Höhe von dem seitlichen Flügel (7) des zugehörigen L-Profils entfernt und hervorsteht, und andererseits eine Endfläche (13), die daran angepasst ist, durch Anstoßen mit einer Kante (9a) der Perforation (9) zusammenzuwirken, die diese Erhebung aufnimmt, wobei so das L-Profil (6) daran gehindert wird, sich von der Bodenplatte (2) zu trennen.

5. Kabelrinnenelement nach Anspruch 3 oder 4, wobei jede Erhebung (11) ein in der zugehörigen Zunge (10) ausgebildeter Buckel ist.

6. Kabelrinnenelement nach einem der vorangehenden Ansprüche, wobei die seitlichen Kanten (4) der Bodenplatte und die L-Profile (6) gekrümmt sind.

## Claims

1. Cable tray element comprising :
- a base plate (2) provided with at least two opposing lateral (4) edges,
- and at lease two L-shaped sections (6), each comprising on the one hand a support flange (8) placed under the base plate (2) parallel with the said plate, and on the other hand, a lateral flange (7) extending perpendicularly to the base plate (2), above the said base plate, the lateral edges (4) of the base plate being fixed to the support flanges (8) of the L-shaped sections (6), the said lateral edges (4) being parallel to the support flanges (8) and resting on the said support flanges, **characterised in that** the lateral edges (4) of the base plate are clipped directly on to the support flanges (8) of the L-shaped sections.

2. Cable tray element according to claim 1, in which the base plate (2) is made of sheet metal and the lateral edges (4) of the plate each include several punched tabs (10) bent into the said base plate, each of these tabs (10) being engaged without slack under the support flange (8) of one of the L-shaped sections (6) parallel to the said support flange (8), whilst the said support plate (2) rests on the said support flange (8).

3. Cable tray element according to claim 2, in which the support flanges (8) of the L-shaped sections (6) all include perforations (9), the tabs (10) of the base plate all include at least one raised section (11) which projects from the said tab and which is engaged into one of the perforations (9) of the corresponding support flange (8) of the L-shaped section, preventing the said L-shaped section from separating from the base plate (2).

4. Cable tray element according to claim 3, in which each raised section (11) of one of the tabs (10) comprises, on the one hand an oblique face (12) which projects at a progressively higher level moving away from the corresponding lateral flange (7) of the L-shaped section (6), and on the other hand, an end face (13) suitable for engaging by butting with one edge (9a) of the perforation (9) which receives the said raised section, thus preventing the said L-shaped section (6) from separating from the base plate (2).

5. Cable tray element according to claim 3 or claim 4, in which each raised section (11) is an extrusion made in the corresponding tab (10).

6. Cable tray element according to any of the foregoing claims, in which the lateral edges (4) of the base plate and the L-shaped sections (6) are curved.
